## Europäisches Patentamt

## European Patent Office

## Office européen des brevets

(11) Publication number: **0 062 452**
**B1**

(12) **EUROPEAN PATENT SPECIFICATION**

(45) Date of publication of patent specification: **04.03.87**

(51) Int. Cl.⁴: **B 65 G 9/00, B 61 B 3/00**

(21) Application number: **82301546.6**

(22) Date of filing: **24.03.82**

(54) Suspension units for suspension systems.

(30) Priority: **02.04.81 GB 8110361**

(43) Date of publication of application:
**13.10.82 Bulletin 82/41**

(45) Publication of the grant of the patent:
**04.03.87 Bulletin 87/10**

(84) Designated Contracting States:
**AT BE CH DE FR GB IT LI LU NL SE**

(56) References cited:
**CH-A- 394 038**
**DE-A-2 550 556**
**DE-A-3 019 644**
**DE-B-2 347 748**
**DE-U-1 922 473**
**US-A-3 759 190**

(73) Proprietor: **Garnett, David Morris**
**Manse Lane**
**Knaresborough W. Yorkshire HG5 8LS (GB)**

(72) Inventor: **Garnett, David Morris**
**Manse Lane**
**Knaresborough W. Yorkshire HG5 8LS (GB)**

(74) Representative: **Denmark, James**
**c/o Bailey Walsh & Co. 5 York Place**
**Leeds LS1 2SD Yorkshire (GB)**

Courier Press, Leamington Spa, England.

## Description

This invention relates to a suspension device for suspension conveyor systems.

Suspension conveyor systems are used for example, in clothing factories in order on the one hand to move groups of garment pieces between different sections in a manufacturing plant, and on the other hand to move completely or partly finished garments to intermediate storage stations or a storage area. Also, the suspension conveyor system may be used for transporting the finished garments from storage to intermediate storage stations or to a dispatch location. In some instances, the transportation vehicles which collect the completed garments from the dispatch stations are provided with means adapted to the suspension conveyor systems, whereby the suspended garments may be conveyed directly into position inside the transportation vehicles.

In such systems, sometimes known as trolleys, there are used suspension devices, being devices which are adapted to receive for example the hooks of coat hangers, and these trolleys are of the "hook-on" variety, in that they are adapted to be mounted on the conveying rail, which is in the form of a round sectioned tube, by hooking on in a direction laterally of the tube length.

The means suspending the trolleys from the rail so that they can run frictionlessly thereon are rollers comprising in fact two roller bearings arranged spaced and with their axes parallel. The outer races of the roller bearings are recessed so that in fact the rollers are known as diablo shaped or simply as diablo rollers, and the guide rail of the system engages in the recess in each of the diablo rollers. When the trolleys are mounted on the rail, the axes of rotation of the diablo rollers are horizontal, and each roller is carried by a bracket which is a rod in the shape of a question mark, and the bracket is swivelably mounted in a rod or bar on which for example, garment hangers may be suspended. These suspension trolleys are approximately 0.15 to 0.16 metres long and are used mainly for the transportation of partly completed garments between work stations in the manufacturing plant, and for delivering the finished or partly finished garments to the storage area.

As regards the transportation of the finished articles from the storage area to despatch, for the supply of orders, what happens is that individual orders are made up by hand picking free storage, and these are grouped together and hung on suspension devices called "sets" which are small metal frameworks capable of hooking onto the trolleys. These frameworks are provided with handles to enable them to be easily hooked and unhooked from the trolleys. The sets can also be hooked onto and unhooked from the suspension rail of the conveyor system proper but of course they are not mobile thereon. Sometimes, if there are no sets available, the individual orders will be suspended on the individual and much larger trolley. Alternatively, the individual orders may be in any event hung on the trolley, and the trolleys moved along the suspension conveyor system to the discharge point, where they are either loaded directly into the vehicles if the vehicle is appropriately adapted, or the individual orders are then suspended on the sets, which are manually carried into the vehicle and are placed in position therein.

In any event, it is clear that the present system involves a considerable amount of handling of the sets, and in many cases will involve very poor utilisation of space, for example in the case where trolleys are moved directly into the vehicle of the vehicle suspension system, and the individual trolleys contain only orders of a small number of garments, for example one or two garments.

The present invention was conceived from the point of view of providing modified sets in order to overcome the shortcomings of the suspension conveyor system currently used, but in the realisation of the invention, it has become apparent that the concept has wider application, and can be used in adaptation in the currently employed trolleys.

In the known trolleys which use diablo rollers, there is also a problem that the trolleys tend to jump off the rail, and it is believed that this is caused partly by the fact that the respective faces of the recess in each diablo roller cannot rotate one relative to the other, and consequently, when the diablo roller moves around a curved portion of the guide rail, there is relative slipping or scrubbing between the rail and at least one surface of the recess leading to a tendency for the roller to ride up on and eventually off the rail.

It is known from U.S. Patent No. 3,759,190 to provide diablo rollers in trolleys in two independently rotatable sections, the outer edges of the diablo rollers being straight so as to run on and lie tangentially to the guide rail when the trolley travels round a curve in the rail, but the trolleys are arranged so that the roller axes are horizontal and it is necessary to construct the rollers in two independently rotatable halves.

It is also known from German Specification No. 1,922,473 to suspend trolleys on a rail by using support rollers, but the rollers in these trolleys are in the nature of wheels with cylindrical outer treads which run longitudinally on the rail on opposite sides of the centre line thereof.

The present invention seeks to provide a suspension device of novel construction and for engagement with the rail in such a manner as to ensure better retention of the suspension device on the rail for example as the suspension device moves round a curved portion of the rail.

According to the invention there is provided a suspension device for use on a round suspension rail such device being adapted to be unhooked from the suspension rail, the device comprising two independently rotatable rollers of which the axes of rotation are arranged so as to define an inverted V shape, whereby the device will be suspended from the rail by virtue of the outer surfaces of the wheel engaging the rail on opposite sides of the central vertical plane thereof (DE—A—1 922 473), characterised in that the rollers are diablo shaped.

The invention thus provides what has not been provided or envisaged before, that on a hook on and off suspension device, diablo shaped rollers are used in inclined position and in pairs. The use of diablo shaped rollers in this manner provides an arrangement in which the ease with which the device can undesirably leave the rail, is reduced.

It should be mentioned at this point that the suspension device according to the invention may be powered or free, or may be partly powered and partly free, or may be convertable from powered to free and vice versa. By powered is meant that the suspension devices can be driven by an overhead drive conveyor with drive flights, and by free is meant that the devices are adapted to be moved manually along the conveyor rail. In the arrangement whereby the devices may be powered or free by selection, there may be an automatic catch arrangement whereby the powered conveyor can pick up suspension devices on appropriate instructions.

Finally, it is to be mentioned that there is a known hook on trolley for suspension conveyor systems, which comprises a single diablo roller located in a slot in a bracket, such bracket having a tail piece for receiving a hook supporting a load. The present invention can also be applied to this form of trolley.

Preferably, each of said rollers comprises a roller bearing with inner and outer races with rolling elements therebetween.

In a preferred case, there are two pairs of said rollers, each pair defining an inverted v-shape, the pairs of rollers being mounted on and spaced along a support bar forming part of the suspension device, the pairs of rollers being set at the same angle, and being of the same size.

Each pair of rollers may be mounted on a mounting enabling the pair of rollers to swivel about an axis which, in the in use position, will be vertical and will lie in the central vertical plane of the guide rail, whereby each pair of rollers will "steer" as the suspension device travels round curved portions of the guide rail.

By virtue of using independently rotatable rollers, it will be appreciated that the individual rollers can rotate differentially, or at different speeds when the unit travels along curved portions of the guide.

The invention can be applied to the known trolley using diablo rollers, in that the or each diablo roller or one of the diablo rollers will be replaced by at least a pair of independently rotatable rollers arranged with their axes at an angle, so as to define a downwardly open V when the device is in the hooked on in use position. The invention has particular application in relation to the "sets" as used currently in the garment industry, because by using individually rotatable rollers these can be made much smaller than the conventional diablo rollers used in trolleys, and can be much more easily accommodated within the size requirements of the sets. These size requirements are a standard throughout the industry, and must be complied with if sets for one consumer are to be interchangeably usable with sets of another consumer, which conditions do prevail in the United Kingdom at this time.

Specifically, when the invention is applied to a set, the set may be adapted by having a cross bar extending between the hook portions, the cross bar carrying two pairs of independently rotatable rollers, in accordance with the present invention. In a further adaptation, the said pairs of rollers will be independently steerable, as hereinbefore described.

In the utilisation of the invention, it can now be seen that the sets, as they have been made mobile in an effective manner, by virtue of the invention, can be used for moving loads between a storage or warehouse area direct to the discharge point, and, where appropriate, directly into the transportation vehicle, whereby considerable manual time will be saved. It is projected that in the long term, the said sets according to the invention may well be usable throughout the entire suspension conveyor system. That is to say, such sets may be usable for transporting partly completed goods between various work stations, and for transporting such goods to storage or warehousing, and for transporting such goods to the dispatch point and into transportation vehicles.

In a specific arrangement, the suspension device is fabricated as far as possible from plastics material components, which may for example be injection moulded. Such specific construction as will be clear hereinafter has a number of advantageous features.

Embodiments of the present invention will now be described by way of example, with reference to the accompanying drawings, wherein:—

Fig. 1 shows in persective elevation of a conventional trolley as currently in use in clothing factories having suspension conveyor systems;

Fig. 2 shows in perspective elevation, a set as currently in use in such a factory;

Fig. 3 shows in perspective elevation a suspension device being a trolley of the general construction shown in Fig. 1, but modified in accordance with the present invention;

Fig. 4 shows a suspension device being a set, according to the present invention;

Figs. 5 and 6 show the set of Fig. 4 in side view and in sectional end view respectively;

Fig. 7 shows in perspective elevation a suspension device according to a second embodiment of the present invention; and

Fig. 8 shows an exploded view and to a larger scale a section of the device shown in Fig. 7.

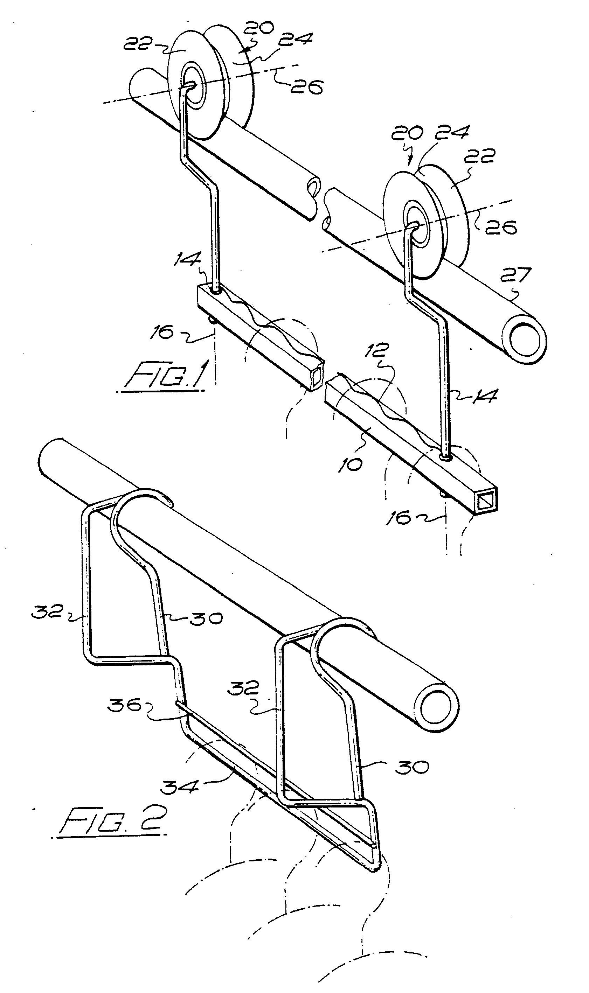

Referring to the drawings, in Fig. 1 there is shown a conventional suspension device for a suspension conveyor system. The device known as a trolley, comprises a rod or bar 10, having a zig zag shaped wire 12 welded to the top surface thereof, in order to provide a plurality of recesses and grooves for receiving individual coat hangers as indicated in dotted lines. At each end the rod is provided with a swivel bracket 14, and each bracket is pivotable about the vertical axis indicated in the drawing by reference 16. Each bracket 14 is somewhat in the shape of a question mark, and at its upper end carries a diablo roller 20 which comprises a roller bearing and has an outer race 22 provided with a v-shaped groove 24, and which outer race is freely rotatable about a horizontal axis 26. To position the trolley on a circular sectioned conveyor rail 27 of the suspension conveyor system, it is simply hooked on so that the rail engages between the faces of the recess of each diablo roller as shown in Fig. 1. The pivoting of the bracket 16 enables the unit to "steer" as it travels round curves in the suspension system. These units have a tendency to derail, especially when unloaded, and it is believed that it is because of the manner by which the trolleys are suspended from the rail using the individual diablo rollers.

The set which is illustrated in Fig. 2 is intended simply to be a hook on device and although these sets are sometimes pushed along the guide rail, they are not specifically designed for this purpose. Each set comprises a metal framework being in the form of a pair of hooks 30, handle portions 32, and the handle portions are connected by a suspension bar portion 34. The additional rod 36 serves the purpose of keeping hangers on the set during transit in transportation vehicles. These sets are usually man handled from place to place, although sometimes they are suspended from the bars 10 of the mobile suspension device such as illustrated in Fig. 1.

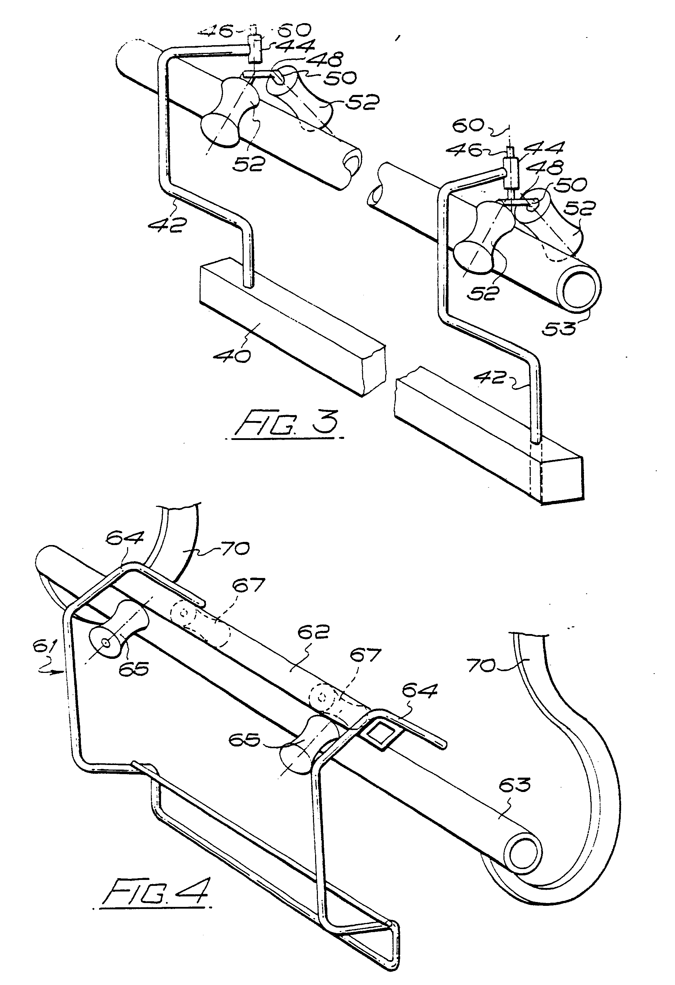

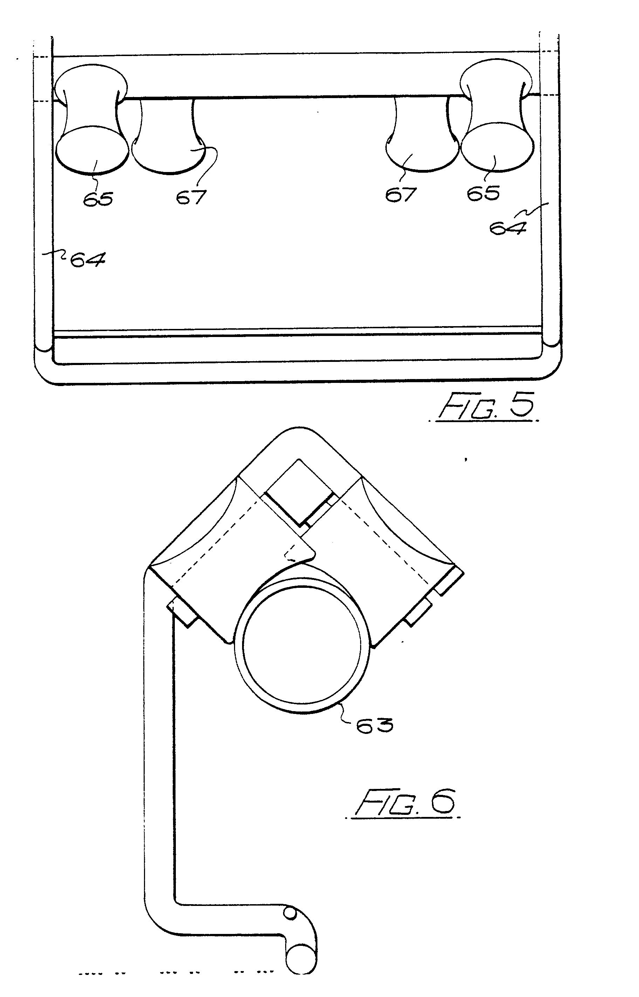

The present invention is concerned with the utilisation of individual rollers defining a V suspension arrangement and Figs. 3 and 4 show how suspension devices can be constructed in accordance with the present invention.

Referring to Fig. 3 it will be seen that the device illustrated again comprises a bar 40 similar to bar 10, by this time it is provided with brackets 42 which are provided with sleeves 44 swivelably to receive pins 46 of mounting brackets 48. The mounting brackets 48 carry stub axles 50 on which are mounted rollers 52 which are in fact roller bearings and the outer races of these rollers 52 engage the opposite sides of the guide rail 53 of the conveyor suspension system when in use, and the said outer races are slightly waisted or diablo shaped for this purpose. The axis of swivelling of the mounting is indicated by reference 60, and it will therefore be seen quite clearly that this device can steer and in addition has the advantage that the individual rollers associated with each mounting can rotate differentially in that each is independently rotatable, and this is of advantage when the device is travelling around curved portions of the guide rail.

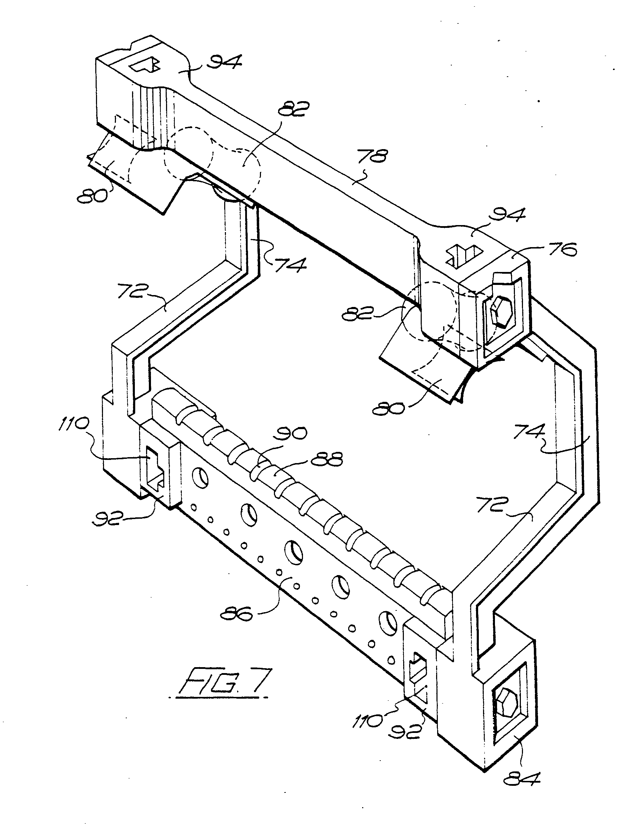

In the arrangement shown in Fig. 4 the device or set 61 is essentially of the same overall dimensions as the set shown in Fig. 2, but in addition there is provided a mounting bar 62 extending between the end hooked portion 64, and the mounting bar carries two pairs of rollers 65, 67. The pairs of rollers 65, 67 are symmetrically arranged in relation to a central plane bisecting the set as shown in the side elevation of Fig. 5 and each roller pair comprises an inner roller 67 and an outer roller 65, the expressions inner and outer being applied to the position in relation to the central plane of the set. The inner and outer rollers 67, 65 of each pair are arranged on stub axles projecting from the mounting bar 60 so as to define a downwardly open v-shape, as shown clearly in Fig. 6, and the outer races of the rollers are again waisted or diablo shaped, also shown clearly in Fig. 6, so as to ensure a neater engagement and better retention on the circular sectioned guide bar, with which the sets will be used, all as shown in Fig. 6.

Fig. 4 shows how the set is mounted on the guide rail 63, and also shows how the guide rail itself is suspended by means of hook shaped brackets (70).

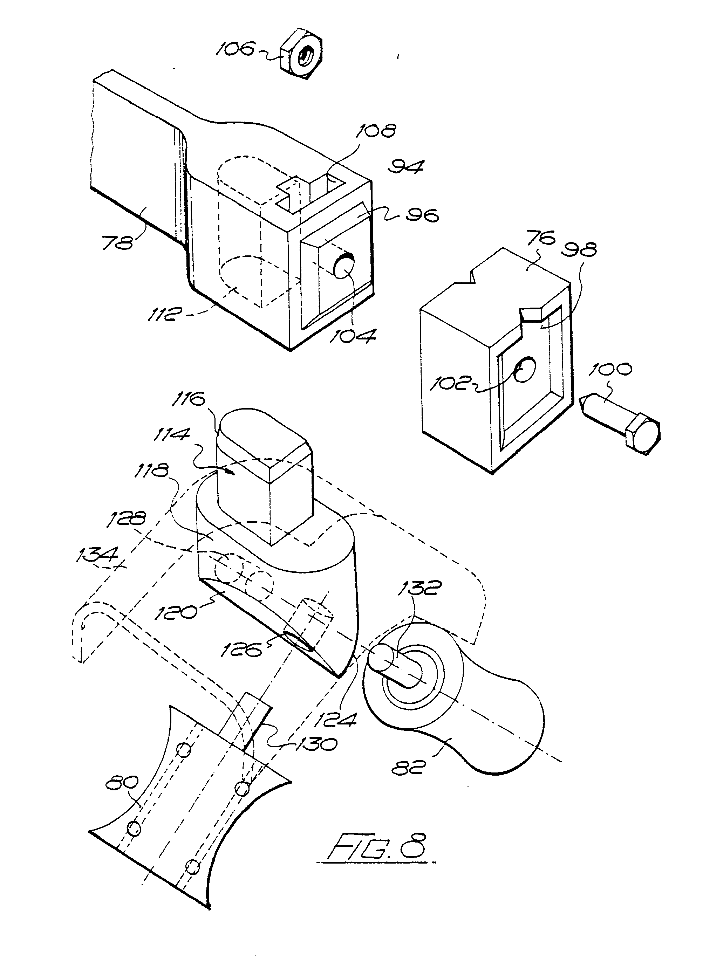

Referring now to the embodiment of the invention shown in Figs. 7 and 8, the suspension device in the form of a set, constructed of plastic moulded components as illustrated, and the set comprises two end brackets 72, each of which is a one-piece moulding, and generally in the form of question marks to provide hand gripping portions 74 to enable the set to be lifted from and placed on the suspension rail. At the top end each bracket 72 has a connector block 76 for connection to a top rail 78 which has V notches for engagement by overhead dogs when the carrier is power driven and carries the pairs of rollers 80 and 82 which function identically to the rollers 85 and 87 of the Figs. 4 to 6 embodiments. At its lower end each bracket 72 has a second mounting block 84 for connection to the lower cross bar 86. The lower cross bar 86 has a curved upper edge 88 with grooves 90 therein for receiving coat hangers in much the same manner as illustrated in Fig. 1.

The ends of the cross bars 78 and 86 have corresponding connection blocks 92 and 94 and the connections between the respective blocks 76 and 94 and 84 and 92 are made in the same fashion as illustrated clearly in Fig. 8 which shows a connecting block 94 of upper cross bar 78, and an upper connecting block 76 of a bracket 72. It will be seen that on the end face of connecting block 94 there is a square locating projection 96 of tapered configuration, and this projection locates in corresponding recess or socket on the opposing face of the block 76, such socket being in fact of the same configuration as the recess 98 illustrated in Fig. 8, so that the blocks accurately register and interfit. A screw or bolt 100 connects the blocks by passing through a bore 102 in block 76 and a bore 104 in block 96, and securement is achieved by placing a nut 106 in a reception slot 108 in block 94. The reception slot 108 is dimensioned so as to receive nut 106 slidably therein, but prevents the nut 106 from rotating when the screw or bolt 100 is screwed thereinto, and this feature can be achieved easily by moulding the bar 78 from plastics material. All connections of the blocks 78, 94 and 84 and 92 are achieved in this fashion, the reception slots for the nuts being indicated in bar 86 by numeral 110.

Fig. 8 also shows how the pairs of rollers 80 and 82 are mounted on the upper bar 78. It will be seen that each block 94 has a recess 112 therein, which opens to the underside of the block 94, and a corresponding peg 114 of a bearing support fits neatly into such recess 112, the peg having a tapered end 116 to facilitate the insertion. The bearing support has a body 118 provided with a pair of mutually inclined faces 120 and 124 through which respectively are formed reception bores 126 and 128 for receiving the ends of spindles 130 and 132 which carry the inner races of the roller bearings or in fact form the said inner races. The said spindle ends 130 and 132 are push fitted into the bores 126 and 128, so as to lie at the appropriate angle as defined by the angle between the faces 120 and 124, as indicated more clearly in Fig. 6. Finally, there is a shroud or cover 134 which fits over the body 118 of the mounting, the peg in fact projecting through the shroud or cover, the said shroud or cover extending over the rollers 80 and 82 when in position, so as to protect same from damage in the event that the set falls to the ground. The shroud or cover may be in a plastics material which is more flexible than that of the other components. The set constructed according to this embodiment can be fabricated quickly and easily making effective use of injection moulded components. All components of this set can be of plastics material, apart perhaps from the rolling elements of the rollers.

With the arrangement described, the set becomes completely mobile on the guiderail and can be transported from for example a warehousing or storage department to a discharge point, and where appropriate directly into the transportation vehicle. Such sets can therefore be used on an interchanged basis as the sets are used currently, so as the sets in fact circulate between different users. The time saved by using sets according to the invention, can be considerable.

Although the embodiments described illustrate adaptations closely related to known devices, it is to be mentioned that the invention is not to be limited to these arrangements, and in fact it is quite clear that as regards the application of the invention to sets, such sets can be moulded in one piece, apart of course from the rolling elements of the rollers.

The invention can also be applied to replace the diablo roller in the single suspension device being devices in which a single diablo roller is used.

The rollers which are used in connection with the invention may be any suitable, in that the races may be constructed from metal and/or plastics, and the rolling elements may be balls and/or rollers. Furthermore, it is possible to use rollers which are not roller bearings, rollers simply being rotatable on spindle means, but it is believed that the friction loading with such arrangements may make them commercially unattractive.

In a modification of the set construction the bottom rail (34 in Fig. 2 and equivalent in Figs. 4 to 8) may be in the form of a shallow V to ensure that the hangers gravitate to the centre of the rail, and/or the bottom rail may have individual hangers apertures to receive individual hangers.

**Claims**

1. A suspension device for use on a round suspension rail such device being adapted to be unhooked from the suspension rail (53), the device comprising two independently rotatable rollers (52, 65, 67, 82) of which the axes of rotation are arranged so as to define an inverted V shape, whereby the device will be suspended from the rail by virtue of the outer surfaces of the wheel engaging the rail on opposite sides of the central vertical plane thereof, characterised in that the rollers (52, 65, 67, 82) are diablo shaped.

2. The device according to claim 1, characterised in that there are two spaced heads each with a pair of said rollers (52), the rollers (52, 65, 67, 82) of each head are arranged with their axes in planes which are spaced in the direction of the suspension rail.

3. The device according to claim 1 or 2, characterised in that each pair of rollers is mounted on a mounting (48) of the head (44) enabling the pair of rollers (52), to swivel about an axis which, in the in-use position, will be vertical and will lie in the central vertical plane of the guide rail (63).

4. The device according to claim 2 or 3, characterised by a pair of end brackets (74), an upper cross bar (18) connecting the top ends of the brackets (74), and a lower cross-bar (86) connecting the lower ends of the brackets (74), the upper cross-bar (78) supporting said roller heads.

5. The device according to Claim 4, characterised in that the brackets (74) and upper and lower cross-bars (78, 86) are plastics moulded components.

6. The device according to claim 5, characterised in that the connection between each cross-bar (78, 86) and bracket (74) is by plug and socket arrangement (96, 98) with a screw (100) passing through the plug (96) and socket (98), and one of said components having a slot (108) slidably but non-rotationally receiving a nut (106) into which the bolt screws.

7. The device according to claim 5 or 6, characterised in that the rollers (82) are supported by mounting means (130, 132) push-fitted into the upper bar.

8. The device according to claim 7, characterised by a shroud or cover (134) extending over the rollers (182) to protect same in the event that the device falls to the ground.

**0 062 452**

## Patentansprüche

1. Aufhängevorrichtung zur Verwendung auf einer runden Aufhängeschiene, wobei diese Vorrichtung von der Aufhängeschiene (53) abnehmbar ist, und zwei unabhängig drehbare Rollen (52, 65, 67, 82) aufweist, deren Rotationsachsen so angeordnet sind, daß sie die Gestalt eines umgekehrten "V" haben, wodurch die Vorrichtung von der Schiene dadurch getragen wird, daß die äußeren Oberflächen der Räder an den bezüglich einer vertikale Mittelebene gegenüberliegenden Seiten der Schiene angreifen, dadurch gekennzeichnet, daß die Rollen (52, 65, 67, 82) nach Art eines Diabolo (sanduhrförmiger Körper) geformt sind.

2. Vorrichtung nach Anspruch 1, dadurch gekennzeichnet, daß zwei mit einem Abstand voneinander angeordnete Köpfe mit einem Paar der Rollen (52) vorhanden sind, und die Rollen (52, 65, 67, 82) jedes Kopfes mit ihren Achsen in Ebenen angeordnet sind, die in Richtung der Trägerschiene einen Abstand haben.

3. Vorrichtung nach Anspruch 1 oder 2, dadurch gekennzeichnet, daß jedes Rollenpaar auf einen Lagerteil (48) eines Kopfes (44) befestigt ist, das es dem Rollenpaar (52) erlaubt, um eine Achse zu schwenken, die in der Gebrauchslage vertikal ist und in der vertikalen Mittelebene einer Führungsschiene (63) liegt.

4. Vorrichtung nach Anspruch 2 oder 3, gekennzeichnet durch ein Paar von Endklammern (74), eine obere Querstange (18), die die oberen Enden der Klammern (74) verbindet, und eine untere Querstange (86), die die unteren Enden der Klammern (74) verbindet, sowie eine obere Querstange (78), die die Rollenköpfe trägt.

5. Vorrichtung nach Anspruch 4, dadurch gekennzeichnet, daß die Klammern (74) und die unteren und oberen Querstangen (78, 86) Kunststoff-Formteile sind.

6. Vorrichtung nach Anspruch 5, dadurch gekennzeichnet, daß die Verbindung zwischen jeder Querstange (78, 86) und der Klammer (74) durch Stecker und Buchsen (96, 98) mit einer Schraube (100) erfolgt, die durch den Stecker (96) und die Buchse (98) faßt, und wobei eine der Komponenten einen Schlitz (108) aufweist, der gleitend aber nicht drehbar eine Mutter (106) aufnimmt in die die Schraube hineingeschraubt wird.

7. Vorrichtung nach Anspruch 5 oder 6, dadurch gekennzeichnet, daß die Rollen (82) durch Befestigungsvorrichtungen (130, 132) durch Festsitz in der oberen Stange befestigt werden.

8. Vorrichtung nach Anspruch 7, gekennzeichnet durch eine Abdeckung oder einen Mantel (134), die/der sich über die Rollen (182) erstreckt, um diese zu schützen, wenn die Vorrichtung herunterfällt.

## Revendications

1. Dispositif de suspension utilisable sur un rail de suspension rond, un tel dispositif étant adapté pour être décroché du rail de suspension (53), le dispositif comprenant deux rouleaux (52, 65, 67, 82) qui peuvent tourner indépendamment, dont les axes de rotation sont disposés de façon à définir une forme de V renversé, par quoi le dispositif sera suspendu au rail grâce aux surfaces extérieures de la roue engageant le rail sur des côtés opposés de son plan vertical central, caractérisé en ce que les rouleaux (52, 65, 67, 82) sont en forme de diabolo.

2. Dispositif selon la revendication 1, caractérisé en ce qu'il comprend deux têtes espacées, chacune ayant une paire desdits rouleaux (52), les rouleaux (52, 65, 67, 82) de chaque tête étant disposés avec leurs axes dans des plans qui sont espacés dans la direction du rail de suspension.

3. Dispositif selon la revendication 1 ou 2, caractérisé en ce que chaque paire de rouleaux est montée sur un support (48) de la tête (44) permettant à la paire de rouleaux (52) de pivoter autour d'un axe qui, dans la position de service, sera vertical et s'étendra dans le plan vertical central du rail de guidage (63).

4. Dispositif selon la revendication 2 ou 3, caractérisé par une paire de supports d'extrémité (74), une traverse supérieure (78) reliant les extrémités supérieures des supports (74), et une traverse inférieure (86) reliant les extrémités inférieures des supports (74), la traverse supérieure (78) supportant lesdites têtes de rouleaux.

5. Dispositif selon la revendication 4, caractérisé en ce que les supports (74) et les traverses supérieure et inférieure (78, 86) sont des composants moulés en matière plastique.

6. Dispositif selon la revendication 5, caractérisé en ce que la liaison entre chaque traverse (78, 86) et support (74) est réalisée par un agencement (96, 98) à broche et cavité, une vis (100) passant à travers la broche (96) et la cavité (98), et l'un desdits composants ayant une fente (108) recevant de façon coulissante mais non rotative un écrou (106) dans lequel le boulon se visse.

7. Dispositif selon la revendication 5 ou 6, caractérisé en ce que les rouleaux (82) sont supportés par des moyens de support (130, 132) insérés dans la barre supérieure.

8. Dispositif selon la revendication 7, caractérisé par une plaque ou couvercle (134) s'étendant sur les rouleaux (82) pour les protéger dans le cas où le dispositif tombe à terre.

_FIG. 1_

_FIG. 2_

1

FIG. 3

FIG. 4

FIG. 5

FIG. 6

_FIG.7_

FIG. 8